Europäisches Patentamt

European Patent Office

Office européen des brevets

(19)

(11) **EP 1 507 424 A1**

(12) **EUROPÄISCHE PATENTANMELDUNG**

(43) Veröffentlichungstag:
 **16.02.2005 Patentblatt 2005/07**

(51) Int Cl.⁷: **H04Q 7/32**

(21) Anmeldenummer: 03018396.6

(22) Anmeldetag: **13.08.2003**

(84) Benannte Vertragsstaaten:
 **AT BE BG CH CY CZ DE DK EE ES FI FR GB GR HU IE IT LI LU MC NL PT RO SE SI SK TR**
 Benannte Erstreckungsstaaten:
 **AL LT LV MK**

(71) Anmelder: **SIEMENS AKTIENGESELLSCHAFT**
 **80333 München (DE)**

(72) Erfinder: **Kutschenreuter, Spiro**
 **80805 München (DE)**

(54) **Verfahren und Mittel zum Aktivieren und Deaktivieren von Anwendungen eines Mobilfunkendgerätes innerhalb eines Mobilfunknetzes**

(57)  Die Erfindung betrifft ein Verfahren und Mittel zum Aktivieren und Deaktivieren von Anwendungen eines Mobilfunkendgerätes (1) innerhalb eines Mobilfunknetzes, bei dem zwischen dem Betreiber des Mobilfunknetzes (2) und dem Mobilfunkendgerät (1) standardisierte Codes, vorzugsweise Netzwerkcodes und/oder Ländercodes (MNC und MCC), über Signalisierungskanäle übertragen werden, die einen Teil der Anwendungen abhängig von der Konfigurierung des Mobilfunkendgerätes (1) und abhängig in welchem Mobilfunknetz und/oder Land sich das Mobilfunkendgerät befindet, aktivieren oder deaktivieren.

Die Erfindung zeichnet sich dadurch aus, dass der Betreiber des Mobilfunknetzes (2) und das Mobilfunkendgerät (1) über die Signalisierungskanäle Codes (4, 4.1, 5, 10, 11, 12, 13 und 14) austauschen, die Befehle enthalten, die den Betreiber des Mobilfunknetzes (2) oder das Mobilfunkendgerät (1) gezielt auffordern, eine oder mehrere Anwendungen des Mobilfunkendgerätes (1) zu aktivieren oder zu deaktivieren.

FIG 2

**Beschreibung**

Die Erfindung betrifft ein Verfahren und Mittel zum Aktivieren und Deaktivieren von Anwendungen eines Mobilfunkendgerätes innerhalb eines Mobilfunknetzes, bei dem zwischen dem Betreiber des Mobilfunknetzes und dem Mobilfunkendgerät standardisierte Codes, vorzugsweise Netzwerkcodes und/oder Ländercodes (MNC und MCC), über Signalisierungskanäle übertragen werden, die einen Teil der Anwendungen, abhängig von der Konfigurierung des Mobilfunkendgerätes und abhängig in welchem Mobilfunknetz und/oder Land sich das Mobilfunkendgerät befindet, aktivieren oder deaktivieren.

In Mobilfunkendgeräten, zum Beispiel für GSM oder WCDMA, gibt es eine Vielzahl von Anwendungen, welche, wenn sie auf dem Endgeräteprozessor ausgeführt werden, einen erheblichen Energiebedarf haben. Wird das Mobilfunkendgerät durch einen Akkumulator versorgt, setzen aktive Anwendungen, in Abhängigkeit des Funktionsumfangs jeder einzelnen Anwendung, die Verfügbarkeitsdauer (Standby-Zeit) eines Mobilfunkendgerätes herab. Einige dieser Anwendungen können vom Benutzer des Mobilfunkendgerätes in seinem Ermessen über die Bedienoberfläche des Mobilfunkendgerätes ein- oder ausgeschaltet werden. Andere Anwendungen hingegen sollen durch den Betreiber des Mobilfunknetzwerkes ein- oder ausgeschaltet werden. Bei diesen speziellen Anwendungen kann es sich um solche handeln, welche zum Beispiel vom Gesetzgeber gefordert oder vom Netzwerkbetreiber gewünscht werden.

Ein Beispiel für eine solche geforderte Anwendung ist der E-OTD-(Enhanced Obeserved Time Difference) Service, welcher vom nordamerikanischen Gesetzgeber vorgeschrieben wird. E-OTD zählt zu den "Location Services" und wird dazu verwendet, ein bestimmtes Mobilfunkendgerät innerhalb eines Netzwerkes bis auf wenige Meter genau zu lokalisieren. Dazu muss die E-OTD-Anwendung im Mobilfunkendgerät ständig aktiv sein. Diese Anwendung veranlasst das Mobilfunkendgerät die Umgebung nach Basisstationen abzusuchen und Laufzeitmessungen von bestimmten Signalen der Basisstationen zu machen. Die Messergebnisse werden dann mit einer entsprechenden Auswertung, auf Abruf der Basisstation, an sie zurückgemeldet. Damit das Endgerät die Daten auf Verlangen des Netzwerkes sofort bereitstellen kann, muss das Endgerät die E-OTD-Messwerte ständig bereit halten. Dies führt zu einem erhöhten Stromverbrauch und setzt die Standby-Zeit des Mobilfunkendgerätes herab.

Unter eingeschalteter oder aktivierter Anwendung in dieser Erfindungsmeldung ist das Ausführen von zu einer Anwendung gehörendem Programmcode in einem Endgeräteprozessor zu verstehen. Die Ausführung des Anwendungscodes im Prozessor muss hierbei nicht kontinuierlich sein. Sie kann zeitlich durch andere höher priorisierte Codefragmente immer wieder unterbrochen werden. Eine solche Anwendung kann auf zusätzliche Peripherie im Endgerät zugreifen, wie zum Beispiel das Display, Audio-Funktion oder den Funk.

Eine Anwendung ist ausgeschaltet oder deaktiviert, wenn der Programmcode zu einer Anwendung im nicht flüchtigen Speicher eines Mobilfunkendgerätes vorhanden ist. Eine Abarbeitung des Anwendungscodes erfolgt jedoch im Endgeräteprozessor auch über längere Zeit hinweg nicht.

Bisher wurde, wenn ein Netzwerkbetreiber eine solche stromintensive Anwendung in den Mobilfunkendgeräten der Kunden integriert haben wollte, der erhöhten Stromverbrauch in Kauf genommen oder für diese stromintensive Anwendung auf eine andere Anwendung verzichtet. Der Hersteller der Mobilfunkendgeräte unterstützt den Netzwerkbetreiber dabei mit einer für ihn spezifischen Konfigurierung des Mobilfunkendgerätes.

Eine weitere Möglichkeit solche Anwendungen ein- oder auszuschalten, wird auch über Identifizierungscodes realisiert. Das heißt, ein Mobilfunkendgerät kann zum Beispiel beim Wechsel in ein anderes Mobilfunknetz oder in ein anderes Land, anhand der empfangenen Identifizierungscodes, eine Anwendung ausführen oder nicht ausführen. Diese Funktion muss aber im Mobilfunkendgerät so vorkonfiguriert werden. Als Beispiel für solche Identifizierungscodes sind per Funk übertragene Identifizierungscodes beim internationalen Netzwerkcode und beim internationalen Ländercode (MNC und MCC) zu nennen. Der Nachteil dieser Lösung ist, dass das Einschalten oder das Ausschalten der Anwendung abhängig vom Aufenthaltsort des Mobilfunkendgerätes erfolgt und nicht direkt vom Betreiber des Mobilfunknetzes beeinflussbar ist.

Es ist daher Aufgabe der Erfindung, ein Verfahren und Mittel zum Aktivieren und Deaktivieren von Anwendungen eines Mobilfunkendgerätes vorzustellen, bei dem sowohl der Betreiber eines Mobilfunknetzes über das Mobilfunknetz direkt eine oder mehrere Anwendung eines Mobilfunkendgerätes ein- oder ausschalten kann, als auch der Bediener des Mobilfunkendgerätes indirekt eine oder mehrere Anwendung eines Mobilfunkendgerätes ein- oder ausschalten lassen kann.

Diese Aufgabe wird durch die Merkmale des unabhängigen Verfahrensanspruchs 1 oder gegenständlich durch den Patentanspruch 9 gelöst. Vorteilhafte Weiterbildungen der Erfindung sind Gegenstand untergeordneter Patentansprüche.

Der Erfinder hat erkannt, dass es über das Mobilfunknetz möglich ist, Anwendungen in Mobilfunkendgeräten nach Belieben ein- oder auszuschalten, wenn genormte und standardisierte Codes ähnlich den Netzwerkcodes und Ländercodes mit Ein- oder Ausschaltbefehlen für diese Anwendungen versehen und zwischen dem Mobilfunkendgerät und der Mobilfunknetzstation des Betreibers ausgetauscht werden.

Entsprechend diesem allgemeinen Erfindungsgedanken schlägt der Erfinder vor, das bekannte Verfahren zum Aktivieren und Deaktivieren von Anwendungen eines Mobilfunkendgerätes innerhalb eines Mobilfunknetzes, bei dem zwischen dem Betreiber des Mobilfunknetzes und dem Mobilfunkendgerät standardisierte Codes, vorzugsweise Netzwerkcodes und/oder Ländercodes (MNC und MCC), über Signalisierungskanäle übertragen werden, die einen Teil der Anwendungen abhängig von der Konfigurierung des Mobilfunkendgerätes und abhängig in welchem Mobilfunknetz und/oder Land sich das Mobilfunkendgerät befindet, aktivieren oder deaktivieren, dahingehend zu verbessern, dass der Betreiber des Mobilfunknetzes und das Mobilfunkendgerät über die Signalisierungskanäle Codes austauschen, die Befehle enthalten, die den Betreiber des Mobilfunknetzes oder das Mobilfunkendgerät gezielt auffordern, eine oder mehrere Anwendungen des Mobilfunkendgerätes zu aktivieren oder zu deaktivieren.

Hierdurch ist es für den Betreiber des Mobilfunknetzes möglich, gezielt eine oder mehrere Anwendungen eines oder mehrerer Mobilfunkendgeräte zu aktivieren oder zu deaktivieren. Aber auch für den Bediener des Mobilfunkendgerätes oder für das Mobilfunkendgerät besteht die Möglichkeit indirekt Anwendungen vom Betreiber des Mobilfunknetzes aktivieren oder deaktivieren zu lassen. Beispielsweise kann das Mobilfunkendgerät bei geringer Akkukapazität die Mobilfunknetzstation auffordern, möglichst viele Anwendungen im Mobilfunkendgerät zu schließen.

Bei den zwischen Mobilfunknetzbetreiber und dem Mobilfunkendgerät ausgetauschten Codes handelt es sich um genormte und standardisierte Nachrichten. Hierin unterscheiden sich diese Codes zum Beispiel von Kurznachrichten (SMS), bei denen eine netzunabhängige Standardisierung nicht möglich ist.

Für das Verfahren ist es günstig, wenn Anwendungen, die ein Bediener eines Mobilfunkendgerätes über die Bedienoberfläche aktiviert hat, durch die übertragenen Codes deaktiviert werden. Hierdurch besteht für den Betreiber des Mobilfunknetzes eine gewisse Kontroll- und Manipulationsmöglichkeit über das Mobilfunkendgerät. Es können nun zum Beispiel auch gesetzliche Anforderungen, wie zum Beispiel E-OTD, Netzwerk und Länder unabhängig aktiviert oder deaktiviert werden.

Weiter ist es vorteilhaft, wenn den Codes jeweils eine Kennung zugefügt wird, durch die diese an eine oder mehrere Anwendungen des Mobilfunkendgerätes adressiert werden. Hierdurch wird sichergestellt, dass Anwendungen gezielt und nicht unbeabsichtigt aktiviert oder deaktiviert werden.

Die eine oder die mehreren Anwendungen des Mobilfunkendgerätes sollte/n zeitversetzt zum Empfang der Codes aktiviert oder deaktiviert werden können. Durch Vorgabe eines bestimmten Timerwertes kann die Zeitspanne, ab der eine Anwendung aktiviert oder deaktiviert wird, eingestellt werden. Hierbei besteht die Möglichkeit, dass der Bediener des Mobilfunkendgerätes über eine noch folgende Aktivierung oder Deaktivierung einer Anwendung vorher informiert wird und er bis zur Aktivierung oder Deaktivierung dieser Anwendung reagieren kann.

Es ist günstig, wenn das Mobilfunkendgerät den Betreiber des Mobilfunknetzes benachrichtigt, wenn eine oder mehrere Anwendungen aktiviert oder deaktiviert wurden. Hierdurch kann der Betreiber kontrollieren, ob der Ausführungsbefehl tatsächlich im Mobilfunkendgerät ausgeführt wurde.

Es ist außerdem vorgesehen, dass der Betreiber des Mobilfunknetzes das Mobilfunkendgerät auffordert, einen Statusbericht an den Betreiber des Mobilfunknetzes zurückzusenden, der Informationen darüber enthält, welche Anwendungen aktiviert oder deaktiviert sind. Dadurch kann sehr einfach der Einstellungszustand des Mobilfunkendgerätes überwacht werden.

Weiterhin ist es vorteilhaft, wenn das Mobilfunkendgerät den Betreiber des Mobilfunknetzes auffordert, Anwendungen des Mobilfunkendgerätes zu aktivieren oder zu deaktivieren.

Durch das neue Verfahren kann auch die Standby-Zeit eines Mobilfunkendgerätes erhöht werden. Aktive Anwendungen verkürzen durch ihren Stromverbrauch die Standby-Zeit des Mobilfunkendgerätes. Werden solche Anwendungen des Mobilfunkendgerätes nur bei Bedarf durch den Betreiber des Mobilfunknetzes aktiviert so wird in der Zeit, in der die Anwendungen deaktiviert sind, der Stromverbrauch reduziert und somit die Standby-Zeit verlängert.

Entsprechend dem neuen Verfahren schlägt der Erfinder auch Mittel zum Aktivieren und Deaktivieren von Anwendungen eines Mobilfunkendgerätes innerhalb eines Mobilfunknetzes vor, wobei ein Teil der Anwendungen abhängig von der Konfigurierung des Mobilfunkendgerätes und abhängig in welchem Mobilfunknetz und/oder Land sich das Mobilfunkendgerät befindet, durch standardisierte Codes, vorzugsweise Netzwerkcodes und/oder Ländercodes (MNC und/oder MCC), die über Signalisierungskanäle übertragen werden, aktiviert oder deaktiviert wird, wobei die Mittel sich dadurch kennzeichnen, dass sie zumindest einen Code aufweisen, der zwischen Betreiber des Mobilfunknetzes und Mobilfunkendgerät über die Signalisierungskanäle ausgetauscht wird und der eine Aktivierung oder Deaktivierung einer oder mehrerer Anwendungen des Mobilfunkendgerätes bewirkt.

Durch die Mittel ist es für den Betreiber des Mobilfunknetzes möglich, gezielt eine oder mehrere Anwendungen eines oder mehrerer Mobilfunkendgeräte zu aktivieren oder zu deaktivieren. Aber auch für den Bediener des Mobilfunkendgerätes oder für das Mobilfunkendgerät besteht die Möglichkeit, indirekt Anwendungen vom Betreiber des Mobilfunknetzes aktivieren oder deaktivieren zu lassen. Bei den zwischen Mobilfunknetzbetreiber und dem Mobilfunkendgerät ausgetauschten Codes handelt es sich um genormte und standardisierte Nachrichten. Hierin unterscheiden sich diese Codes zum Beispiel von Kurznachrichten.

Es ist vorteilhaft, wenn durch die übertragenen Codes eine Deaktivierung der Anwendungen stattfindet, die ein Bediener eines Mobilfunkendgerätes über die Bedienoberfläche aktiviert hat. Hierdurch besteht für den Betreiber des Mobilfunkendgerätes eine gewisse Kontroll- und Manipulationsmöglichkeit über das Mobilfunkendgerät. Es können nun zum Beispiel auch gesetzliche Anforderungen, wie zum Beispiel E-OTD, Netzwerk und Länder, unabhängig aktiviert oder deaktiviert werden.

Der Code kann eine Kennung aufweisen, durch die eine Adressierung des Codes an eine oder mehrere Anwendungen stattfindet. Hierdurch wird sichergestellt, dass Anwendungen gezielt und nicht unbeabsichtigt aktiviert oder deaktiviert werden.

Es ist auch vorteilhaft, wenn der Code eine Timerfunktion enthält, die die eine oder die mehreren Anwendungen zeitversetzt zum Empfang des Codes aktiviert oder deaktiviert. Durch Vorgabe eines bestimmten Timerwertes in der Timerfunktion kann die Zeitspanne, ab der eine Anwendung aktiviert oder deaktiviert wird, eingestellt werden. Hierbei besteht die Möglichkeit, dass der Bediener des Mobilfunkendgerätes über eine noch folgende Aktivierung oder Deaktivierung einer Anwendung vorher informiert wird und er bis zur Aktivierung oder Deaktivierung dieser Anwendung reagieren kann.

Günstig ist es, wenn für die Mittel eine Bestätigungsnachricht vorgesehen ist, die das Mobilfunkendgerät an den Betreiber des Mobilfunknetzes sendet, wenn eine oder mehrere Anwendungen aktiviert oder deaktiviert wurden. Hierdurch erhält der Betreiber des Mobilfunknetzes eine weitere Kontrollmöglichkeit, die ihn informiert, ob der Ausführungsbefehl tatsächlich im Mobilfunkendgerät ausgeführt wurde.

Weiterhin können die Mittel über einen Statusabfragebefehl verfügen, durch den der Betreiber des Mobilfunknetzes eine Nachricht des Mobilfunkendgerätes anfordert, die Informationen darüber enthält, welche Anwendungen im Mobilfunkendgerät aktiviert oder deaktiviert sind. Dadurch kann sehr einfach der Einstellungszustand des Mobilfunkendgerätes überwacht werden.

Auch ein Aufforderungsbefehl ist vorgesehen, der vom Mobilfunkendgerät an den Betreiber des Mobilfunknetzes gesendet wird und der das Mobilfunknetz beziehungsweise den Betreiber auffordert, Anwendungen des Mobilfunkendgeräts zu aktivieren oder zu deaktivieren.

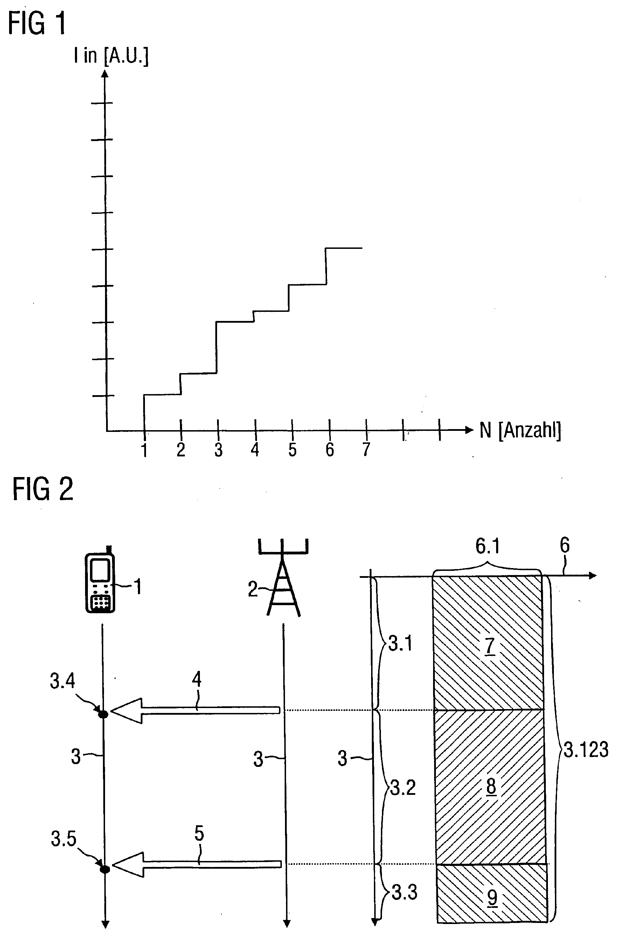

Im Folgenden wird die Erfindung anhand bevorzugter Ausführungsbeispiele mit Hilfe der Figuren 1 bis 6 näher beschrieben, wobei in den Figuren folgende Abkürzungen verwendet werden: 1: Mobilfunkendgerät; 2: Mobilfunknetzstation; 3: Zeitachse; 3.1: Zeitspanne von "O" bis zum Zeitpunkt des Einschalten der Anwendung; 3.2: Zeitspanne zwischen dem Zeitpunkt des Einschaltens und des Ausschaltens der Anwendung; 3.3: Zeitspanne, ab dem Zeitpunkt des Ausschaltens bis zur aktuellen Zeit; 3.123: Summe aus den Zeitspannen 3.1, 3.2 und

$$3.3 = \sum_{i=1}^{3} 3.i \, ;$$

3.4: Zeitpunkt an dem eine Anwendung eingeschaltet wird; 3.5: Zeitpunkt an dem eine Anwendung ausgeschaltet wird; 4: Nachricht zum Einschalten einer Anwendung; 4.1: Nachricht zum Einschalten einer Anwendung mit einem Zeitversatz $\tau$; 5: Nachricht zum Ausschalten einer Anwendung; 6: Achse auf der die Stromaufnahme des Mobilfunkendgeräts aufgetragen ist; 6.1: Stromaufnahme; 7: Stromverbrauch in der Zeitspanne 3.1; 8: Stromverbrauch in der Zeitspanne 3.2; 9: Stromverbrauch in der Zeitspanne 3.3; 10: Bestätigungsnachricht über das Einschalten einer Anwendung; 11: Bestätigungsnachricht über das Ausschalten einer Anwendung; 12: Anforderungsnachricht um eine Anwendung auszuschalten; 13: Nachricht zum Abfragen von eingeschalteten Anwendungen; 14: Nachricht, welche Anwendungen eingeschaltet oder ausgeschaltet sind.

Die Figuren zeigen im Einzelnen:

Figur 1:     Diagramm, in dem die Stromaufnahme gegenüber der Anzahl der Anwendungen aufgetragen ist;

Figur 2:     Prinzipskizze, die eine mögliche Anwendung des neuen Verfahrens erläutert;

Figuren 3 bis 6:     Prinzipskizzen, in denen weitere mögliche Austauschnachrichten dargestellt sind.

Die Figur 1 zeigt ein Diagramm, in dem die Stromaufnahme eines Mobilfunkendgerätes gegenüber der Anzahl, der im Mobilfunkendgerät ausgeführten Anwendungen, aufgetragen ist. Auf der Ordinate ist die Stromaufnahme beispielhaft in willkürlichen Einheiten und auf der Abszisse ist die Anzahl N der ausgeführten Anwendungen des Mobilfunkendgeräts aufgetragen. Aus dem Verlauf der treppenförmigen Kurve ist zu entnehmen, dass mit zunehmender Anzahl der ausgeführten Anwendungen im Mobilfunkendgerät auch die Stromaufnahme steigt. Die einzelnen Anwendungen verbrauchen unterschiedliche Mengen an Energie, somit ist die Zunahme beziehungsweise die Abnahme der Stromaufnahme beim Ausführen beziehungsweise beim Beenden von unterschiedlichen Anwendungen unterschiedlich hoch. Dies ist in der treppenförmigen Kurve an den verschiedenen Höhen der Stufen zu erkennen.

Die Figur 2 zeigt in einer Prinzipskizze eine Möglichkeit, wie das neue Verfahren zum Aktivieren und Deaktivieren von Anwendungen eines Mobilfunkendgerätes 1 zur Reduzierung der Stromaufnahme und somit gleichzeitig zur Erhöhung der Standby-Zeit des Mobilfunkendgerätes 1 eingesetzt werden kann. In der linken Figurenhälfte wird durch die beiden Symbole zum einen ein Mobilfunkendgerät 1 und zum anderen eine Mobilfunknetzstation 2 dargestellt. Unterhalb beider Symbole ist jeweils ein Pfeil eingezeichnet, der die Zeitachse 3 symbolisiert. Zwischen Mobilfunkendgerät 1 und Mobilfunknetzstation 2 werden in der Zeit Nachrichten 4 und 5 ausgetauscht.

An dieser Stelle wird erwähnt, dass es sich bei diesen Nachrichten nicht um bekannte Kurznachrichten (SMS) handelt, die zwischen einem Mobilfunkendgerät 1 und einer Mobilfunknetzstation 2, beispielsweise einem SMS-Service Center, ausgetauscht werden. Bei dem neuen Verfahren zum Aktivieren und Deaktivieren von Anwendungen eines Mobilfunkendgerätes handelt es sich um ein allgemein gültiges Verfahren, da die Inhalte der ausgetauschten Nachricht im Gegensatz zum Inhalt einer SMS normiert beziehungsweise standardisiert und somit nicht frei wählbar sind. Bei einer SMS können sich nur zwei Parteien proprietär auf ein Format zur Applikationsaktivierung einigen, welche aber dann nicht von allen Mobilfunkteilnehmern in gleicher Weise genutzt werden kann, da womöglich das verwendete Format sich mit Formaten von einer dritten beziehungsweise einer vierten Partei ausschließen. Eine Standardisierung von SMS-Inhalten ist nicht möglich. In dem neuen Verfahren werden standardisierte Nachrichten ausgetauscht, die zum Beispiel auf der sogenannten "Mobile radio interface layer 3 specification" aufsetzten.

In der rechten Figurenhälfte der Figur 2 wird durch den waagrechten Pfeil die Achse 6 der Stromaufnahme des Mobilfunkendgerätes 1 symbolisiert. Durch den senkrechten Pfeil wird wiederum die Zeitachse 3 dargestellt. Die rechteckigen Flächen, die durch die Achsen 3 und 6 begrenzt werden, symbolisieren die verbrauchte Energie des Akkus des Mobilfunkendgerätes 1. Bisher verbrauchten im Mobilfunkendgerät 1 aktive Anwendungen zum Beispiel E-OTD, permanent elektrische Energie. Dies wird durch die rechteckige Fläche angedeutet, die aus dem Produkt der Stromaufnahme 6.1 und aus der Summe der Zeitspannen 3.123, also die Einzelzeitspannen 3.1, 3.2 und 3.3 addiert, gebildet wird. Mit dem neuen Verfahren kann eine solche Anwendung nur bei Bedarf eingeschaltet werden. So wird eine Anwendung zum Zeitpunkt 3.4 durch eine Nachricht 4 zum Einschalten einer Anwendung und zum Zeitpunkt 3.5 durch eine Nachricht 5 zum Ausschalten dieser Anwendung eingeschaltet und dann wieder ausgeschaltet. Die Anwendung ist also nur in der Zeitspanne 3.2 aktiv, symbolisiert durch die Fläche 8. In der Zeitspanne 3.1 und 3.3, in denen die Anwendung nicht aktiv ist, kann Strom und somit Energie des Mobilfunkendgeräteakkus eingespart werden. Der eingesparte Energieverbrauch wird durch die Flächen 7 und 9 symbolisiert.

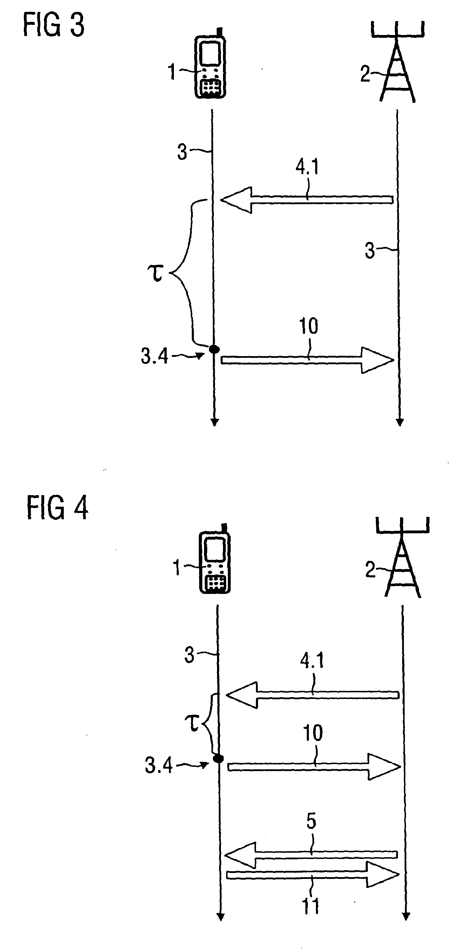

Die Figuren 3 bis 6 zeigen jeweils Prinzipskizzen, in denen weitere zwischen Mobilfunkendgerät 1 und Mobilfunknetzstation 2 austauschbare Nachrichten dargestellt sind. Die Figuren zeigen im oberen Bereich jeweils links das Mobilfunkendgerät 1 und rechts die Mobilfunknetzstation 2. Unterhalb des Mobilfunkendgeräts 1 und der Mobilfunknetzstation 2 ist jeweils eine Zeitachse 3 aufgezeichnet, auf der die durch Pfeile symbolisierten ausgetauschten Nachrichten, dargestellt werden.

In Figur 3 wird eine Nachricht 4.1 zum "zeitversetzten" Einschalten einer Anwendung im Mobilfunkendgerät 1 von der Mobilfunknetzstation 2 zum Mobilfunkendgerät 1 gesendet.

Nachdem Eingang der Nachricht 4.1 wird die Anwendung im Mobilfunkendgerät 1 um eine Zeitspanne τ versetzt zum Zeitpunkt 3.4 eingeschaltet. Das Mobilfunkendgerät 1 sendet eine Bestätigungsnachricht 10 an die Mobilfunknetzstation 2 zurück, dass diese Anwendung eingeschaltet wurde.

Die Figur 4 zeigt im oberen Bereich der Zeitachse 3 die beiden ausgetauschten Nachrichten 4.1 und 10 aus Figur 3, nur mit anderem Zeitversatz τ. Durch die beiden unteren Pfeile wird zum einen eine Nachricht 5 zum Ausschalten einer Anwendung und eine darauf folgende Bestätigungsnachricht 11 symbolisiert. Von der Mobilfunknetzstation 2 wird gezielt an das Mobilfunkendgerät 1 die Nachricht 5 geschickt. Mit der Nachricht 11 bestätigt das Mobilfunkendgerät 1 der Mobilfunknetzstation 2, dass diese Anwendung tatsächlich ausgeschaltet wurde. Die beiden unteren Nachrichten 5 und 11 werden ohne vorgegebenen Zeitversatz ausgetauscht. Lediglich die für den Nachrichtenaustausch notwendige Zeit liegt zwischen den beiden Nachrichten. Dies wird dadurch angedeutet, das die unteren beiden Pfeile enger beieinander liegen als die oberen beiden Pfeile.

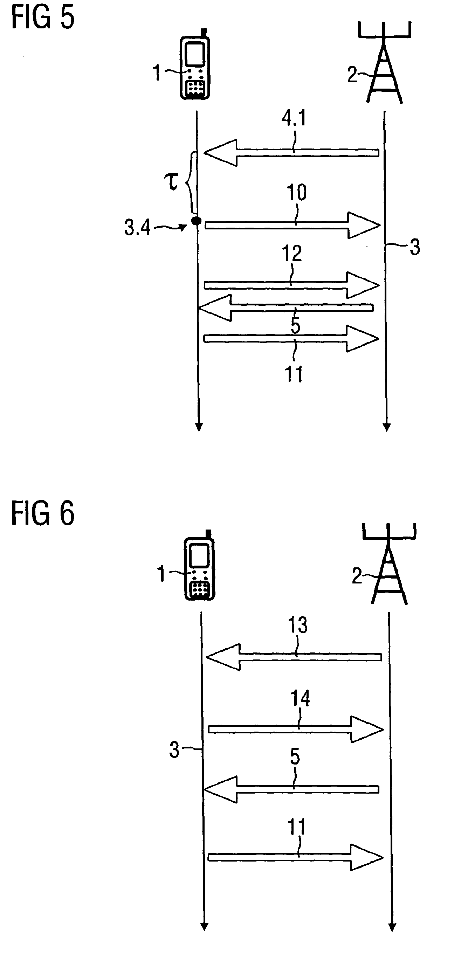

Die Figur 5 zeigt im oberen Bereich der Zeitachse 3 wiederum den zeitversetzten Nachrichtenaustausch wie in Figur 3. Im unteren Bereich der Zeitachse sendet das Mobilfunkendgerät 1 zusätzlich an die Mobilfunknetzstation 2 eine Anforderungsnachricht 12, eine Anwendung des Mobilfunkendgerätes 1 zu deaktivieren. Über solch eine Anforderungsnachricht kann aber auch die Aufforderung des Mobilfunkendgerätes 1 an die Mobilfunknetzstation 2 gehen eine oder mehrere Anwendungen des Mobilfunkendgerätes 1 zu aktivieren oder zu deaktivieren. Die Mobilfunknetzstation 2 sendet auf die Nachricht 12 eine Nachricht 5 zum Abschalten dieser Anwendung an das Mobilfunkendgerät 1. Nachdem die Anwendung im Mobilfunkendgerät 1 abgeschaltet wurde, sendet dieses eine Bestätigungsnachricht 11.

Die Figur 6 zeigt in der Prinzipdarstellung weitere mögliche Nachrichten, die in dem neuen Verfahren zwischen Mobilfunkendgerät 1 und Mobilfunknetzstation 2 ausgetauscht werden können. So kann die Mobilfunknetzstation 2 eine Nachricht 13 an das Mobilfunkendgerät 1 senden, die dieses auffordert, eine Nachricht 14 zurückzusenden, in der Informationen enthalten sind, welche Anwendungen im Mobilfunkendgerät 1 ein- oder ausgeschaltet sind. Wird in der Mobilfunknetzstation 2 durch die Informationen der Nachricht 14 festgestellt, dass eine Anwendung unnötig oder ungewollt aktiv ist, so kann die Mobilfunknetzstation 2 eine Nachricht 5 an das Mobilfunkendgerät 1 senden, die diese Anwendung deaktiviert. Das Mobilfunkendgerät 1 sendet eine Bestätigungsnachricht 11 an die Mobilfunknetzstation 2 zurück, dass diese Anwendung ausgeschaltet wurde.

Insgesamt wird also durch die Erfindung, ein Verfahren und Mittel zum Aktivieren und Deaktivieren von Anwendungen eines Mobilfunkendgerätes vorgestellt, bei dem der Betreiber eines Mobilfunknetzes aktiv über das Mobilfunknetz eine oder mehrere Anwendung eines Mobilfunkendgerätes ein- oder ausschalten kann.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Liste der verwendeten Abkürzungen:

| E-OTD | Enhanced Observed Time Difference |
|---|---|
| GSM | Global System for Mobile Communications |
| IMEI | International Mobile Equipment Identify |
| IMSI | International Mobile Subscriber Identify |
| MCC | Mobile Country Code |
| MNC | Mobile Network Code |
| SMS | Short Message Service |
| TMSI | Temporary Mobile Subscriber Identify |
| WCDMA | Wideband Code Division Multiplex Access |

Bezugszeichenliste

| 1 | Mobilfunkendgerät |
|---|---|
| 2 | Mobilfunknetzstation / Betreiber des Mobilfunknetzes |
| 3 | Zeitachse |
| 3.1 | Zeitspanne von "O" bis zum Zeitpunkt des Einschalten der Anwendung |
| 3.2 | Zeitspanne zwischen dem Zeitpunkt des Einschaltens und des Ausschaltens der Anwendung |
| 3.3 | Zeitspanne, ab dem Zeitpunkt des Ausschaltens bis zur aktuellen Zeit |
| 3.123 | Summe |

$$\sum_{i=1}^{3} 3.i$$

aus den Zeitspannen 3.1, 3.2 und 3.3

| 3.4 | Zeitpunkt an dem eine Anwendung einge- |
|---|---|

schaltet wird

| 3.5 | Zeitpunkt an dem eine Anwendung ausgeschaltet wird |
|---|---|
| 4 | Nachricht zum Einschalten einer Anwendung |
| 4.1 | Nachricht zum Einschalten einer Anwendung mit einem Zeitversatz $\tau$ |
| 5 | Nachricht zum Ausschalten einer Anwendung |
| 6 | Achse auf der die Stromaufnahme des Mobilfunkendgeräts aufgetragen ist |
| 6.1 | Stromaufnahme |
| 7 | Stromverbrauch in der Zeitspanne 3.1 |
| 8 | Stromverbrauch in der Zeitspanne 3.2 |
| 9 | Stromverbrauch in der Zeitspanne 3.3 |
| 10 | Bestätigungsnachricht über das Einschalten einer Anwendung |
| 11 | Bestätigungsnachricht über das Ausschalten einer Anwendung |
| 12 | Anforderungsnachricht um eine Anwendung auszuschalten |
| 13 | Nachricht zum Abfragen von eingeschalteten Anwendungen |
| 14 | Nachricht, welche Anwendungen eingeschaltet oder ausgeschaltet sind |
| $\tau$ | Zeitspanne/Zeitversatz |

**Patentansprüche**

1. Verfahren zum Aktivieren und Deaktivieren von Anwendungen eines Mobilfunkendgerätes innerhalb eines Mobilfunknetzes, bei dem zwischen dem Betreiber des Mobilfunknetzes (2) und dem Mobilfunkendgerät (1) standardisierte Codes, vorzugsweise Netzwerkcodes und/oder Ländercodes (MNC und MCC), über Signalisierungskanäle übertragen werden, die einen Teil der Anwendungen abhängig von der Konfigurierung des Mobilfunkendgerätes (1) und abhängig in welchem Mobilfunknetz und/oder Land sich das Mobilfunkendgerät (1) befindet, aktivieren oder deaktivieren,
**dadurch gekennzeichnet,**
**dass** der Betreiber des Mobilfunknetzes (2) und das Mobilfunkendgerät (1) über die Signalisierungskanäle Codes (4, 4.1, 5, 10, 11, 12, 13 und 14) austauschen, die Befehle enthalten, die den Bertreiber des Mobilfunknetzes (2) oder das Mobilfunkendgerät (1) gezielt auffordern, eine oder mehrere Anwendungen des Mobilfunkendgerätes (1) zu aktivieren oder zu deaktivieren.

2. Verfahren gemäß dem voranstehenden Patentanspruch 1,
**dadurch gekennzeichnet,**
**dass** Anwendungen, die ein Bediener eines Mobilfunkendgerätes (1) über die Bedienoberfläche aktiviert hat, durch die übertragenen Codes (4, 4.1, 5, 10, 11, 12, 13 und 14) deaktiviert werden.

3. Verfahren gemäß einem der voranstehenden Patentansprüche 1 und 2,
**dadurch gekennzeichnet,**
**dass** den Codes (4, 4.1, 5, 10, 11, 12, 13 und 14) jeweils eine Kennung zugefügt wird, durch die diese an eine oder mehrere Anwendungen des Mobilfunkendgerätes (1) adressiert werden.

4. Verfahren gemäß einem der voranstehenden Patentansprüche 1 bis 3,
**dadurch gekennzeichnet,**
**dass** die eine oder die mehreren Anwendungen des Mobilfunkendgerätes (1) zeitversetzt zum Empfang der Codes (4, 4.1, 5, 10, 11, 12, 13 und 14) aktiviert oder deaktiviert wird/werden.

5. Verfahren gemäß einem der voranstehenden Patentansprüche 1 bis 4,
**dadurch gekennzeichnet,**
**dass** das Mobilfunkendgerät (1) den Betreiber des Mobilfunknetzes (2) benachrichtigt, wenn eine oder mehrere Anwendungen aktiviert oder deaktiviert wurden.

6. Verfahren gemäß einem der voranstehenden Patentansprüche 1 bis 5,
**dadurch gekennzeichnet,**
**dass** der Betreiber des Mobilfunknetzes (2) das Mobilfunkendgerät (1) auffordert, einen Statusbericht (14) an den Betreiber des Mobilfunknetzes (2) zurückzusenden, der Informationen darüber enthält, welche Anwendungen aktiviert oder deaktiviert sind.

7. Verfahren gemäß einem der voranstehenden Patentansprüche 1 bis 6,
**dadurch gekennzeichnet,**
**dass** das Mobilfunkendgerät (1) den Betreiber des Mobilfunknetzes (2) auffordert, Anwendungen des Mobilfunkendgerätes zu aktivieren oder zu deaktivieren.

8. Verfahren gemäß einem der voranstehenden Patentansprüche 1 bis 7,
**dadurch gekennzeichnet,**
**dass** zur Erhöhung der Standby-Zeit eines Mobilfunkendgerätes (1), bei dem aktive Anwendungen durch ihren Stromverbrauch die Standby-Zeit des Mobilfunkendgerätes (1) verkürzen, Anwendungen des Mobilfunkendgerätes (1) nur bei Bedarf durch den Betreiber des Mobilfunknetzes (2) aktiviert werden.

9. Mittel zum Aktivieren und Deaktivieren von Anwendungen eines Mobilfunkendgerätes (1) innerhalb eines Mobilfunknetzes, bei denen ein Teil der Anwendungen abhängig von der Konfigurierung des Mobilfunkendgerätes (1) und abhängig in welchem Mobilfunknetz und/oder Land sich das Mobilfunkendgerät (1) befindet, durch standardisierte Codes, vorzugsweise Netzwerkcodes und/oder Ländercodes (MNC und/oder MCC), die über Signalisierungskanäle übertragen werden, aktiviert oder deaktiviert wird,
**dadurch gekennzeichnet,**
**dass** die Mittel zumindest einen Code (4, 4.1, 5, 10, 11, 12, 13 und 14) aufweisen, der zwischen Betreiber des Mobilfunknetzes (2) und Mobilfunkendgerät (1) über die Signalisierungskanäle ausgetauscht wird und der eine Aktivierung oder Deaktivierung einer oder mehrerer Anwendungen des Mobilfunkendgerätes (1) bewirkt.

10. Mittel gemäß dem voranstehenden Patentanspruch 9,
**dadurch gekennzeichnet,**
**dass** durch die übertragenen Codes (4, 4.1, 5, 10, 11, 12, 13 und 14) eine Deaktivierung der Anwendungen stattfindet, die ein Bediener eines Mobilfunkendgerätes (1) über die Bedienoberfläche aktiviert hat.

11. Mittel gemäß einem der voranstehenden Patentansprüche 9 und 10,
**dadurch gekennzeichnet,**
**dass** der Code (4, 4.1, 5, 10, 11, 12, 13 und 14) eine Kennung aufweist, durch die eine Adressierung des Codes (4, 4.1, 5, 10, 11, 12, 13 und 14) an eine oder mehrere Anwendungen stattfindet.

12. Mittel gemäß einem der voranstehenden Patentansprüche 9 bis 11,
**dadurch gekennzeichnet,**
**dass** der Code (4, 4.1, 5, 10, 11, 12, 13 und 14) eine Timerfunktion enthält, die die eine oder die mehreren Anwendungen zeitversetzt zum Empfang des Codes (4, 4.1, 5, 10, 11, 12, 13 und 14) aktiviert oder deaktiviert.

13. Mittel gemäß einem der voranstehenden Patentansprüche 9 bis 12,
**dadurch gekennzeichnet,**
**dass** eine Bestätigungsnachricht (11) vorgesehen ist, die das Mobilfunkendgerät (1) an den Betreiber des Mobilfunknetzes (2) sendet, wenn eine oder mehrere Anwendungen aktiviert oder deaktiviert wurden.

14. Mittel gemäß einem der voranstehenden Patentansprüche 9 bis 13,
**dadurch gekennzeichnet,**
**dass** ein Statusabfragebefehl vorgesehen ist, durch den der Betreiber des Mobilfunknetzes (2) eine Nachricht des Mobilfunkendgerätes (1) anfordert, die Informationen darüber enthält, welche Anwendungen im Mobilfunkendgerät (1) aktiviert oder deaktiviert sind.

15. Mittel gemäß einem der voranstehenden Patentansprüche 9 bis 14,
**dadurch gekennzeichnet,**
**dass** ein Aufforderungsbefehl (12) vorgesehen ist, der vom Mobilfunkendgerät (1) an den Betreiber des Mobilfunknetzes (2) gesendet wird und der den Betreiber des Mobilfunknetzes auffordert Anwendungen des Mobilfunkendgeräts (1) zu aktivieren oder zu deaktivieren.

FIG 1

I in [A.U.]

N [Anzahl]

1    2    3    4    5    6    7

FIG 2

1

2

6.1    6

3.1    7

3.4    4

3    3    3    3.2    8    3.123

3.5    5

3.3    9

FIG 3

FIG 4

## FIG 5

## FIG 6

| | Europäisches Patentamt | EUROPÄISCHER RECHERCHENBERICHT | Nummer der Anmeldung EP 03 01 8396 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 470 447 B1 (LAMBERT HOWARD SHELTON ET AL) 22. Oktober 2002 (2002-10-22) <br><br> * Spalte 2, Zeile 34 – Zeile 43 * <br> * Spalte 5, Zeile 30 – Zeile 38 * <br> * Spalte 11, Zeile 1 – Zeile 6 * <br> * Spalte 4, Zeile 15 – Zeile 29 * <br> * Spalte 8, Zeile 65 – Spalte 9, Zeile 18 * <br> * Spalte 3, Zeile 45 – Zeile 58 * | 1,3,5,7, 9,11,13, 15 | H04Q7/32 |
| Y | | 2,4,6,8, 10,12,14 | |
| Y | US 2001/031631 A1 (PITTS ROBERT L) 18. Oktober 2001 (2001-10-18) <br> * Seite 2, linke Spalte, Zeile 50 – Zeile 66 * | 2,8,10 | |
| Y | EP 1 197 901 A (NOKIA CORP) 17. April 2002 (2002-04-17) <br> * Absatz '0001! * <br> * Absatz '0006! – Absatz '0007! * <br> * Absatz '0035! – Absatz '0037! * <br> * Absatz '0039! – Absatz '0042! * | 4,12 | |
| A | US 5 258 751 A (JOHNSON RICHARD E ET AL) 2. November 1993 (1993-11-02) <br> * Spalte 6, Zeile 3 – Zeile 18 * | 4,12 | |
| Y | US 2002/194320 A1 (MOYES-CLARK SHANNON JENNIFFER ET AL) 19. Dezember 2002 (2002-12-19) <br> * Absatz '0030!; Abbildung 5 * <br> * Absatz '0037! * <br> * Absatz '0053! * | 6,14 | |

**RECHERCHIERTE SACHGEBIETE (Int.Cl.7)**

H04Q
H04M
G08B
H04L

Der vorliegende Recherchenbericht wurde für alle Patentansprüche erstellt

| Recherchenort | Abschlußdatum der Recherche | Prüfer |
|---|---|---|
| Berlin | 12. Oktober 2004 | Bittermann, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**Europäisches**
**Patentamt**

Nummer der Anmeldung

EP 03 01 8396

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

**MANGELNDE EINHEITLICHKEIT DER ERFINDUNG ERGÄNZUNGSBLATT B**

Nummer der Anmeldung

EP 03 01 8396

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1,2,3,5,7,8,9,10,11,13,15

   Verfahren und Mittel für die Aktivierung und Deaktivierung von Applikationen eines Mobilfunkendgerätes. Das Mobilfunknetz und das Mobilfunkendgerät tauschen über die Signalisierungskanäle Befehle aus, die das Mobilfunknetz oder das Mobilfunkendgerät auffordern, eine oder mehrere Anwendungen des Mobilfunkendgerätes zu aktivieren oder zu deaktivieren. Den übertragenen Nachrichten wird jeweils eine Kennung zugefügt, durch die diese an eine oder mehrere Anwendungen des Mobilfunkgerätes adressiert werden.

   ---

2. Ansprüche: 4,12

   Verfahren und Mittel für die Aktivierung und Deaktivierung von Applikationen eines Mobilfunkendgerätes, bei dem die Nachrichten eine Timerfunktion enthalten, mit der eine oder mehrere Anwendung/en des Mobilfunkendgerätes zeitversetzt zum Empfang der Nachrichten aktiviert oder deaktiviert werden.

   ---

3. Ansprüche: 6,14

   Verfahren und Mittel für die Aktivierung und Deaktivierung von Applikationen eines Mobilfunkendgerätes, bei dem das Mobilfunknetz das Mobilfunkendgerät auffordert, einen Statusbericht an das Mobilfunknetz zurückzusenden, der Informationen darüber enthält, welche Anwendungen des Mobilfunkendgerätes aktiviert oder deaktiviert sind.

   ---

## ANHANG ZUM EUROPÄISCHEN RECHERCHENBERICHT
## ÜBER DIE EUROPÄISCHE PATENTANMELDUNG NR.

EP 03 01 8396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6470447 | B1 | 22-10-2002 | GB | 2348568 A | 04-10-2000 |
| | | | AU | 3444100 A | 16-10-2000 |
| | | | CA | 2361938 A1 | 05-10-2000 |
| | | | CN | 1345521 T | 17-04-2002 |
| | | | CZ | 20013479 A3 | 17-12-2003 |
| | | | EP | 1166582 A1 | 02-01-2002 |
| | | | WO | 0059253 A1 | 05-10-2000 |
| | | | HU | 0200571 A2 | 29-06-2002 |
| | | | JP | 2002540748 T | 26-11-2002 |
| | | | PL | 356672 A1 | 28-06-2004 |
| | | | SG | 90112 A1 | 23-07-2002 |
| | | | TW | 449988 B | 11-08-2001 |
| US 2001031631 | A1 | 18-10-2001 | KEINE | | |
| EP 1197901 | A | 17-04-2002 | GB | 2366696 A | 13-03-2002 |
| | | | EP | 1197901 A2 | 17-04-2002 |
| | | | US | 2002024540 A1 | 28-02-2002 |
| US 5258751 | A | 02-11-1993 | AT | 181610 T | 15-07-1999 |
| | | | CA | 2121362 A1 | 13-05-1993 |
| | | | DE | 69229481 D1 | 29-07-1999 |
| | | | DE | 69229481 T2 | 23-03-2000 |
| | | | DK | 611465 T3 | 17-01-2000 |
| | | | EP | 0611465 A1 | 24-08-1994 |
| | | | JP | 3027418 B2 | 04-04-2000 |
| | | | JP | 7500713 T | 19-01-1995 |
| | | | KR | 142516 B1 | 17-08-1998 |
| | | | WO | 9309520 A1 | 13-05-1993 |
| US 2002194320 | A1 | 19-12-2002 | KEINE | | |

EPO FORM P0461

Für nähere Einzelheiten zu diesem Anhang : siehe Amtsblatt des Europäischen Patentamts, Nr. 12/82